# EUROPEAN PATENT APPLICATION

(11) **EP 4 495 718 A1**
(43) Date of publication of application: **22.01.2025**
(21) Application number: 24187819.8
(22) Date of filing: 10.07.2024
(51) Int. Cl.: G05B 15/02, F24F 11/30, F24F 11/65

(54) **SYSTEMS AND METHODS FOR DETECTING OCCUPANCY OF ROOMS**

(30) Priority: 12.07.2023 US 202363513286 P
(71) Applicant: Carrier Corporation, Palm Beach Gardens, FL 33418 (US)
(72) Inventor: PIETRZYKOWSKI, Christopher, Palm Beach Gardens, 33418 (US); ELBSAT, Mohammad N., Palm Beach Gardens, 33418 (US)
(74) Representative: Dehns

(57) **Abstract**

A method for detecting an occupancy of a room (120,120a,120b,120n) comprises receiving, from a plurality of sensors (122a, 122b, 122n) located within the room, sensor readings indicative of corresponding occupancy parameters. The plurality of sensors (122a,122b,122n) are configured to measure the corresponding occupancy parameters. The method further comprises determining, based on the received sensor readings, one or more of an occupancy status of the room (120,120a,120b,120n), and a confidence value associated with the determined occupancy status. The occupancy status is indicative of one of a positive status indicating occupancy of the room and a negative status indicating non-occupancy of the room. The method further comprises, in response to determining the occupancy status, triggering a control action associated with the room (120,120a,120b,120n) based on the determined occupancy status.

## Description

### CROSS REFERENCE TO RELATED APPLICATION

This application claims the benefit of U.S. Provisional Patent Application No. 63/513,286 filed on July 12, 2023, which is incorporated by reference herein in its entirety.

### FIELD OF THE INVENTION

The invention generally relates to detection systems, and more particularly relates to systems and methods for detecting occupancy of rooms.

### BACKGROUND

Generally, rooms at establishments offering accommodation are allotted to occupants desiring for a stay at the establishments. The occupants may not spend a majority of time within the room, and the room may remain unoccupied for a substantial duration during the period of stay of the occupants at the establishments. When a room is unoccupied, the facilities within the room, such as lights and heating, cooling, and air-conditioning (HVAC) units, may continue to operate leading to energy consumption.

Further, conventional techniques to detect presence of occupants within the rooms include single sensor-based systems and timer-based systems. For instance, timer-based systems may classify the room as occupied for a longer duration than required. Further, motion sensors may be used to detect the presence of occupants in the room, however, motion sensors do not cover every area of the room leading to blind spots that may result in incorrect classification of the room as unoccupied. Furthermore, proximity sensors may be used to detect the presence of occupants in the room, however, proximity sensors lead to unbalanced detection.

As an example, detection based on motion sensors result in a high false negative rate, i.e., room detected as unoccupied when the room is occupied. As another example, detection based on proximity sensors result in a high false positive rate, i.e., room detected as occupied when the room is not occupied. False positive rates are further linked with an increased energy usage of the appliances within the room, leading to wasted energy use.

Moreover, single sensor-based systems are not resilient as a failure of the sensor results in a failure of the entire detection system. Therefore, it would be advantageous to provide a solution that can overcome the above-discussed problems.

### SUMMARY

This summary is provided to introduce a selection of concepts, in a simplified format, that are further described in the detailed description of the specification. This summary is neither intended to identify key or essential inventive concepts of the invention and nor is it intended for determining the scope of the invention, which is as set out in the appended claims.

According to a first aspect of the invention there is provided a system for detecting an occupancy of a room. The system comprises a plurality of sensors located within the room and a control unit communicatively connected with the plurality of sensors. The plurality of sensors are configured to measure corresponding occupancy parameters. The control unit comprises one or more processors configured to receive, from the plurality of sensors, sensor readings indicative of the corresponding occupancy parameters. Each of the received sensor readings includes a sequence of measurements, over a predetermined time duration, of the corresponding occupancy parameters. The one or more processors are further configured to determine, based on the received sensor readings, one or more of an occupancy status of the room, and a confidence value associated with the determined occupancy status. The occupancy status is indicative of one of a positive status indicating occupancy of the room and a negative status indicating non-occupancy of the room. The one or more processors are further configured to, in response to determining the occupancy status, trigger a control action associated with the room based on the determined occupancy status.

Optionally, each of the received sensor readings includes a sequence of measurements, over a predetermined time duration, of the corresponding occupancy parameters.

Optionally, to determine one or more of the occupancy status and the confidence value, the one or more processors are configured to select a neural network (NN) model from a plurality of NN models based on a type of the plurality of sensors and the corresponding occupancy parameters. Optionally, the one or more processors are configured to determine the one or more of the occupancy status and the confidence value based on the selected NN model.

Optionally, to determine one or more of the occupancy status and the confidence value, the one or more processors are configured to, for each of the received sensor readings, preprocess the sequence of measurements to generate a preprocessed sequence of measurements. Optionally, to preprocess the sequence of measurements, the one or more processors are configured to, at least one of, resample, filter, and normalize the sequence of measurements. Optionally, the one or more processors are configured to determine, based on the selected NN model and the preprocessed sequence of measurements, the occupancy status, and the confidence value.

Optionally, the one or more processors are configured to determine, based on the selected NN model and the preprocessed sequence of measurements, a first classification probability value and a second classification probability value associated with the occupancy status of the room. Optionally, the one or more processors are configured to compare the first classification probability value and the second classification probability value. Optionally, the one or more processors are configured to, in response to a determination that the first classification probability value is greater than the second classification probability value, determine the occupancy status to be the positive status indicating occupancy of the room. Optionally, the one or more processors are configured to, in response to a determination that the second classification probability value is greater than the first classification probability value, determine the occupancy status to be the negative status indicating non-occupancy of the room.

Optionally, to trigger the control action associated with the room, the one or more processors are configured to control an operation of one or more devices associated with the room. Optionally, the one or more devices comprise a heating, ventilation, and air-conditioning (HVAC) system, a thermostat, and lighting units.

Optionally, to trigger the control action associated with the room, the one or more processors are configured to cause information related to the occupancy status and the confidence value to be displayed on one or more of a user interface disposed within the room and a user interface associated with a handheld device of a user.

Optionally, to trigger the control action associated with the room, the one or more processors are configured to send information related to the occupancy status and the confidence value to a room management unit configured for generating, based on the determined occupancy status, one or more of maintenance alerts for the room and tracking alerts for the room.

Optionally, the occupancy parameters comprise one or more of motion, temperature, humidity, pressure, occupant heart-beat readings, proximity, noise, particulate matter (PM), volatile organic compounds (VOCs), carbon dioxide (CO2), light intensity, lock operation, and plug power consumption.

Optionally, the one or more processors are configured to receive, from a user, a user input indicative of a request to determine the occupancy status of the room. Optionally, the one or more processors are configured to, in response to receiving the user input, determine one or more of the occupancy status and the confidence value.

According to a second aspect of the invention there is provided a method for detecting an occupancy of a room. The method comprises receiving, from a plurality of sensors located within the room, sensor readings indicative of corresponding occupancy parameters. The plurality of sensors are configured to measure the corresponding occupancy parameters. Each of the received sensor readings includes a sequence of measurements, over a predetermined time duration, of the corresponding occupancy parameters. Further, the method comprises determining, based on the received sensor readings, one or more of an occupancy status of the room, and a confidence value associated with the determined occupancy status, wherein the occupancy status is indicative of one of a positive status indicating occupancy of the room and a negative status indicating non-occupancy of the room. Further, the method comprises, in response to determining the occupancy status, triggering a control action associated with the room based on the determined occupancy status.

Optionally, each of the received sensor readings includes a sequence of measurements, over a predetermined time duration, of the corresponding occupancy parameters.

Optionally, determining one or more of the occupancy status and the confidence value comprises selecting a neural network (NN) model from a plurality of NN models based on a type of the plurality of sensors and the corresponding occupancy parameters. Optionally, the method comprises determining the one or more of the occupancy status and the confidence value based on the selected NN model.

Optionally, determining one or more of the occupancy status and the confidence value comprises, for each of the received sensor readings, preprocessing the sequence of measurements to generate a preprocessed sequence of measurements. Optionally, preprocessing the sequence of measurements comprises at least one of resampling, filtering, and normalizing the sequence of measurements. Optionally, the method comprises determining, based on the selected NN model and the filtered sequence of measurements, the occupancy status and the confidence value.

Optionally, the method comprises determining, based on the selected NN model and the filtered sequence of measurements, a first classification probability value and a second classification probability value associated with the occupancy status of the room. Optionally, the method comprises comparing the first classification probability value and the second classification probability value. Optionally, the method comprises, in response to a determination that the first classification probability value is greater than the second classification probability value, determining the occupancy status to be the positive status indicating occupancy of the room. Optionally, the method comprises, in response to a determination that the second classification probability value is greater than the first classification probability value, determining the occupancy status to be the negative status indicating non-occupancy of the room.

Optionally, triggering the control action associated with the room comprises controlling an operation of one or more devices associated with the room, wherein the one or more devices comprises a heating, ventilation, and air-conditioning (HVAC) system, a thermostat, and lighting units.

Optionally, triggering the control action associated with the room comprises causing information related to the occupancy status and the confidence value to be displayed on one or more of a user interface disposed within the room and a user interface associated with a handheld device of a user.

Optionally, triggering the control action associated with the room comprises sending information related to the occupancy status and the confidence value to a room management unit configured for generating, based on the determined occupancy status, one or more of maintenance alerts for the room and tracking alerts for the room.

Optionally, the occupancy parameters comprise one or more of motion, temperature, humidity, pressure, occupant heart-beat readings, proximity, noise, particulate matter (PM), volatile organic compounds (VOCs), carbon dioxide (CO2), light intensity, lock operation, and plug power consumption.

Optionally, the method comprises receiving, from a user, a user input indicative of a request to determine the occupancy status of the room. Optionally, the method comprises, in response to receiving the user input, determining one or more of the occupancy status and the confidence value.

To further clarify the advantages and features of the methods, systems, and apparatuses, a more particular description of the methods, systems, and apparatuses will be rendered by reference to specific embodiments thereof, which are illustrated in the appended drawings. It is appreciated that these drawings depict only typical embodiments of the invention and are therefore not to be considered limiting of its scope, which is as set out in the appended claims. The invention will be described and explained with additional specificity and detail with the accompanying drawings.

### BRIEF DESCRIPTION OF THE DRAWINGS

These and other features, aspects, and advantages of the invention will become better understood when the following detailed description is read with reference to the accompanying drawings in which like characters represent like parts throughout the drawings. Certain exemplary embodiments will now be described in greater detail by way of example only and with reference to the accompanying drawings in which:
**Figure 1** illustrates a system environment for detecting occupancy of rooms;
**Figure 2** illustrates a schematic block diagram of the system for detecting occupancy of rooms;
**Figures 3A-3B** illustrate process flow charts depicting methods for detecting occupancy of rooms; and
**Figure 4** illustrates an additional process flow chart depicting a method for training a neural network (NN) model to detect occupancy of rooms.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the invention. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates. The scope of the invention is as set out in the appended claims.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the invention. Thus, appearances of the phrase "in an embodiment", "in another embodiment", "some embodiments", "one or more embodiments" and similar language throughout this specification may but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

In addition to overcoming the challenges related to detecting presence of occupants in a room, embodiments of the invention provide for a system that allows for automatic control of appliances, such as HVAC systems and lighting units, in rooms, which consequently results in energy and cost savings. Further, staff efficiency is improved based on accurate detection of the presence of occupants in the rooms. Thus, a high-confidence occupancy detection system is provided that results in energy and cost savings.

Embodiments of the invention will be described below in detail with reference to the accompanying drawings.

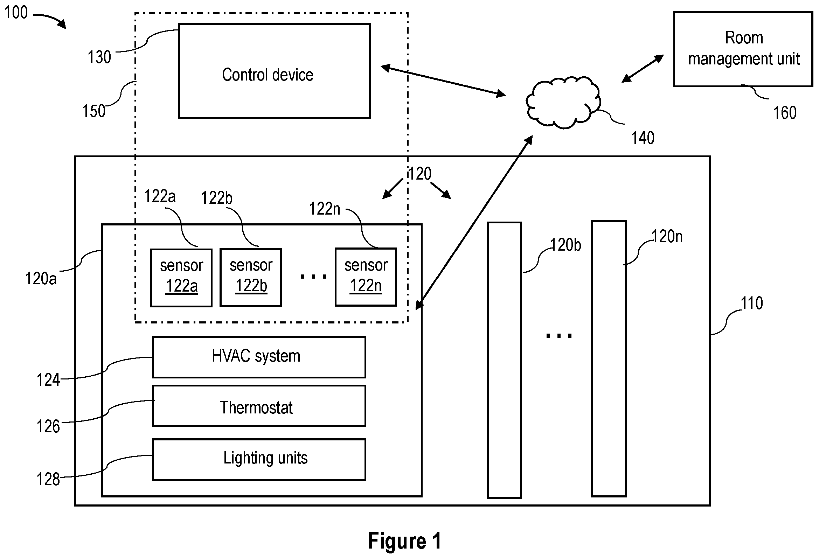

**Figure 1** illustrates a system environment 100 for detecting occupancy of rooms. The system environment 100 may include an indoor area/environment 110 comprising a plurality of rooms 120a-120n (interchangeably referred to as "120" hereinafter). The indoor area 110 may be associated with an establishment providing accommodation to users, such as, but not limited to, a hotel, a lodge, a guest house, and the like. The plurality of rooms 120a-120n may include rooms that have been allotted to users as well as rooms that are available for allotment to users looking for accommodation.

The plurality of rooms 120a-120n may be associated with a plurality of sensors 122a-122n, in that, each room 120 of the plurality of rooms 120a-120n may include one or more of the plurality of sensors 122a-122n located within the room 120. The plurality of sensors 122a-122n may be configured to measure corresponding occupancy parameters associated with the room 120. In some embodiments, each of the plurality of sensors 122a-122n may be configured to measure the corresponding occupancy parameter, the corresponding occupancy parameter being indicative of occupancy of the room 120. In particular, based on the corresponding occupancy parameters sensed by the plurality of sensors, the occupancy of the room 120 may be determined, as will be detailed further below. A person skilled in the art would understand that the details explained with respect to one room 120 may be equally applicable for each of the plurality of rooms 120a-120n, without deviating from the scope of the invention as set out in the appended claims.

In some embodiments, the corresponding occupancy parameters include multiple parameters such as, but not limited to, motion, temperature, humidity, pressure, occupant heart-beat readings, proximity, noise, particulate matter (PM) 2.5, PM 10, volatile organic compounds (VOCs), carbon dioxide (CO2), light intensity, lock operation, and plug power consumption. The plurality of sensors 122a-122n may include sensors configured to sense one or more of the multiple occupancy parameters and generate sensor readings indicative of the sensed occupancy parameters.

In some embodiments, the plurality of sensors 122a-122n may include a passive infrared (PIR) sensor for detecting the motion of any occupants in the room 120. In some embodiments, the plurality of sensors 122a-122n may include temperature sensors, humidity sensors, and pressure sensors to measure temperature, humidity, and pressure respectively within the room 120. In some embodiments, the plurality of sensors 122a-122n may include a proximity sensor for sensing proximity of any occupants with respect to the proximity sensor. In some embodiments, the plurality of sensors 122a-122n may include an indoor air quality (IAQ) sensor for measuring multiple parameters such as, but not limited to, PM 2.5, PM 10, VOCs, and CO2. In some embodiments, the plurality of sensors 122a-122n may include a noise sensor and a light sensor for measuring an amount of noise and an amount of light intensity, respectively, within the room 120. In some embodiments, the plurality of sensors 122a-122n may include a current transformer (CT) sensor for measuring power plug consumption. In some embodiments, the plurality of sensors 122a-122n may include motion sensors and/or radio-frequency identification (RFID) tags to detect lock (and unlock) operation of doors associated with the room 120.

In some embodiments, one or more of the plurality of sensors 122a-122n may be sensors disposed independently at respective locations within the room 120. In some embodiments, one or more of the plurality of sensors 122a-122n may be integrated with detection units disposed within the room 120. In some embodiments, the temperature sensor, the humidity sensor, and the proximity sensor may be integrated with a thermostat disposed within the room 120. In some embodiments, the temperature sensor, the humidity sensor, the PIR sensor, the noise sensor, and the IAQ sensor may be integrated with a smoke detector disposed within the room 120. In some embodiments, the IAQ sensor may be integrated with an IAQ monitoring unit disposed within the room 120.

In some embodiments, each room 120 of the plurality of rooms 120a-120n may be associated with a heating, ventilation, and air conditioning (HVAC) system 124, a thermostat 126, and lighting units 128. The HVAC system 124 may be configured for facilitating circulation of fresh air in the room, and further, facilitate heating and cooling of the room 120. The thermostat 126 may be configured to provide instructions to the HVAC system 124 with respect to heating and cooling set points desired in the room 120. The lighting units 128 may include various electrical components such as power outlets, lights, lamps, and other electric devices within the room 120.

The system environment further comprises a control device 130 communicatively coupled to the plurality of sensors 122a-122n over a communication network 140, as discussed below herein throughout the specification. In some embodiments, the HVAC system 124, the thermostat 126, and the lighting units 128 may be communicatively coupled to the control device 130 over the communication network 140. The control device 130 may be configured to detect the occupancy of the room 120 based on the occupancy parameters sensed by the plurality of sensors 122a-122n associated with the room 120. The control device 130 and the plurality of sensors 122a-122n may form a system 150 for detecting occupancy of the room 120. In some embodiments, the functionalities of the system 150 comprising the control device 130 and the plurality of sensors 120a-122n may be provided by means of a single device.

In some embodiments, the control device 130 may be a server-based device that is remote to the indoor area 110. In some embodiments, the control device 130 may be a cloud-based device. In some embodiments, the control device 130 may be provided within the indoor area 110. For instance, the control device 130 may be integrated with the thermostat 126 and the functionalities of the control device 130 may be provided through the thermostat 126, and thus, the thermostat 126 may form part of the system 150 in such embodiments. In some embodiments, one or more components of the control device 130 may be provided on cloud while one or more components of the control device 130 may be provided on a server.

In some embodiments, the system environment 100 may include a room management unit 160 in communication with the system 150, in particular, the control device 130 of the system 150. The room management unit 160 may be configured to manage allotment status of the plurality of rooms 120a-120n and manage maintenance of the plurality of rooms 120a-120n. In some embodiments, the room management unit 160 may be associated with a front desk system that may be configured to manage maintenance and allotments of the plurality of rooms 120a-120n. In some embodiments, the room management unit 160 may be implemented on hardware on-site, i.e., at the indoor area 110, for instance, at a reception space within the indoor area 110. In some embodiments, the room management unit 160 may be implemented remotely, such as, via a cloud-based network and/or a server-based system. In some embodiments, the functionalities associated with the room management unit 160 may be provided via a handheld device associated with one or more staff members.

In some embodiments, the room management unit 160 may be configured to track the allotment status of the plurality of rooms 120a-120n and generate tracking alerts for the plurality of rooms 120a-120n. In some embodiments, the room management unit 160 may be configured to communicate the allotment status of the plurality of rooms 120a-120n to the control device 130. In some embodiments, the room management unit 160 may be configured to generate maintenance alerts for the plurality of rooms 120a-120n. In some embodiments, the room management unit 160 may be configured to communicate maintenance alerts and tracking alerts to one or more staff members to facilitate the management of components (the HVAC system 124, the thermostat 126, and the lighting units 128) within the plurality of rooms 120a-120n as well as maintenance of the plurality of rooms 120a-120n, as discussed in detail throughout this specification hereinafter.

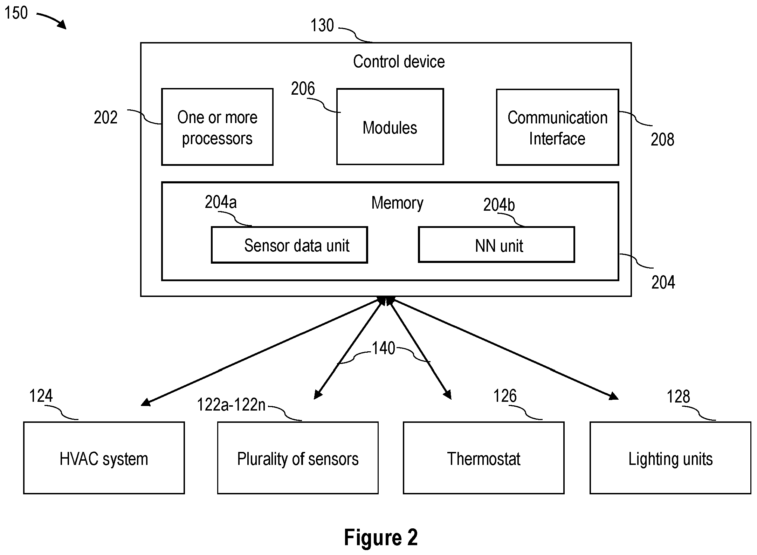

**Figure 2** illustrates a schematic block diagram of the system 150 for detecting occupancy of the plurality of rooms 120a-120n in the indoor area 110.

As shown in Figure 2, the system 150 comprises at least the control device 130 and the plurality of sensors 122a-122n associated with the room 120. It is appreciated that although a single room 120 is depicted in Figure 2, the control device 130 may be in communication with the plurality of sensors 122a-122n associated with other rooms of the plurality of rooms 120a-120n, and the details provided with respect to the plurality of sensors 122a-122n for the room 120 is equally applicable for the plurality of sensors 122a-122n for the other rooms.

In one or more embodiments, the control device 130 may comprise one or more processors 202, a memory 204, one or more modules 206, and a communication interface 208.

The one or more processors 202 may be configured to communicate with the memory 204 to store sensor readings generated by the plurality of sensors 122a-122n. In some embodiments, the memory 204 may comprise sensor data unit 204a for storing the sensor readings generated by the plurality of sensors 122a-122n. The sensor readings may include real-time sensor readings as well as historic sensor readings. In one or more embodiments, the one or more processors 202 may be one or more microprocessor(s) or microcontroller(s). The one or more processors 202 may include one or a plurality of processors, may include one or more general-purpose processors, such as a central processing unit (CPU), an application processor (AP), or the like, a graphics-only processing unit such as a graphics processing unit (GPU), a visual processing unit (VPU), and/or an Artificial intelligence (Al) dedicated processor such as a neural processing unit (NPU).

In some embodiments, the memory 204 may store data and instructions executable by the processor(s) 202 to perform the method steps for detecting occupancy of the room 120, as discussed herein throughout the specification. The memory 204 may further include, but is not limited to, a non-transitory computer-readable storage media such as various types of volatile and non-volatile storage media, including but not limited to, random access memory, read-only memory, programmable read-only memory, electrically programmable read-only memory, electrically erasable read-only memory, flash memory, magnetic tape or disk, optical media and the like. Further, the non-transitory computer-readable storage media of memory 204 may include executable instructions in a form of the modules 206 and a database to store data. The modules 206 may include a set of instructions that may be executed to cause the one or more processors 202 to perform any one or more of the methods for detecting occupancy of the plurality of rooms 120a-120n based on sensor readings, as disclosed herein throughout the specification. Specifically, the one or more modules 206 may be configured to perform the steps of the invention using the data stored in the database of the memory 204 for detecting occupancy of the plurality of rooms 120a-120n based on the sensor readings. In another embodiment, the modules 206 may be one or more hardware units that may be outside the memory 204. In one embodiment, the memory 204 may communicate via a bus within the processor(s) 202.

In one or more embodiments, the communication interface 208 may include a transmitter and a receiver configured to communicate with the plurality of sensors 122a-122n, via the communication network 140. In some embodiments, the communication interface 208 may be configured to communicate with one or more of the HVAC system 124, the thermostat 126, and the lighting units 128, via the communication network 140. The communication via the communication network 140 may be based on a wireless communication protocol. The communication interface 208 may be configured for communicating internally between internal hardware components and with external devices, e.g., the plurality of sensors 122a-122n, via one or more networks (e.g., radio technology). The communication interface 208 may include an electronic circuit specific to a standard that may enable wireless communication.

Referring to Figures 1 and 2, the one or more processors 202 may be configured to receive sensor readings from the plurality of sensors 122a-122n associated with the room 120. The sensor readings may be indicative of the corresponding occupancy parameters associated with the room 120. In some embodiments, the one or more processors 202 may be configured to receive sensor readings from at least two sensors of the plurality of sensors 122a-122n. In some embodiments, the one or more processors 202 may be configured to receive sensor readings from a combination of sensors of the plurality of sensors 122a-122n. For instance, the one or more processors 202 may be configured to receive sensor readings from a combination of IAQ sensor and PIR sensor, a combination of IAQ sensor and noise sensor, a combination of IAQ sensor, PIR sensor, and noise sensor, a combination of IAQ sensor, PIR sensor and proximity sensor, a combination of IAQ sensor, noise sensor and proximity sensor, and the like.

In some embodiments, the sensor readings from each of the plurality of sensors 122a-122n may include sequence of measurements of the corresponding occupancy parameters, the sequence of measurements being sensed over a predetermined time duration. The sequence of measurements from each of the plurality of sensors 122a-122n may include real-time measurements of the corresponding occupancy parameter and historic measurements of the corresponding occupancy parameters. In some embodiments, the predetermined time duration may include any amount of time duration, such as, but not limited to, 30 minutes, 45 minutes, 1 hour, 2 hours, and so on. In some embodiments, the sequence of measurements may be in the form of a time series data indicative of the measurements of corresponding occupancy parameters over the predetermined time duration.

The one or more processors 202 may be configured to receive the sensor readings from the plurality of sensors 122a-122n and determine, based on the received sensor readings, an occupancy status of the room 120 and/or a confidence value associated with the occupancy status of the room 120. The occupancy status of the room 120 indicates whether the room 120 is occupied or unoccupied. The occupancy status of the room 120 may be indicative of one of a positive status or a negative status. The positive status may indicate occupancy of the room 120 while the negative status may indicate non-occupancy of the room 120.

In some embodiments, the one or more processors 202 may be configured to detect the occupancy status and/or the confidence value using a plurality of neural network (NN) models. The plurality of NN models may include trained machine learning (ML) models that process the sensor readings to detect the occupancy status and/or the confidence value. In some embodiments, the plurality of NN models may include supervised classification networks, such as, but not limited to, pattern recognition network (PRN), long-short term memory (LSTM), and the like.

In some embodiments, the plurality of NN models may be stored in a NN unit 204b of the memory 204. In some embodiments, each NN model of the plurality of NN models may be associated with a corresponding combination of sensors of the plurality of sensors 122a-122n. In particular, each NN model may be related to a type of the plurality of sensors 122a-122n and the corresponding occupancy parameters, in that, each NN model may be trained to detect occupancy status and confidence value for the related types and combinations of the plurality of sensors 122a-122n and the corresponding occupancy parameters. As an example, a first NN model may be related to a combination of IAQ sensor and PIR sensor, the first NN model being configured to detect the occupancy status and the confidence value based on sensor readings from the IAQ sensor and the PIR sensor. As another example, a second NN model may be related to a combination of IAQ sensor, PIR sensor, noise sensor, and proximity sensor, the second NN model being configured to detect the occupancy status and the confidence value based on sensor readings from the IAQ sensor, the PIR sensor, the noise sensor, and the proximity sensor. Accordingly, each of the plurality of NN models may be related to particular types and combinations of the plurality of sensors 122a-122n and the corresponding occupancy parameters.

In some embodiments, the one or more processors 202 may be configured to select a NN model from the plurality of NN models based on the type, or combination, of the plurality of sensors 122a-122n sending the sensor readings for the corresponding occupancy parameters. The one or more processors 202 may be configured to determine the occupancy status of the room 120 and the confidence value based on the selected NN model. In some embodiments, the selected NN model may be an optimal NN model to detect the occupancy status of the room 120, the optimal NN model being predetermined during training of the plurality of NN models. Accordingly, a related NN model (for instance, optimal NN model) may be used to accurately determine the occupancy status of the room based on the plurality of sensors being used in the room and providing sensor readings for the corresponding occupancy parameters associated with the room. Further, in case there is a failure of a particular sensor within the room, a different NN model may be used to accurately determine the occupancy status based on the other working sensors in the room. Furthermore, in case the sequence of measurements being received from combination of sensors associated with the optimal NN model comprises missing data, then a different NN model may be selected to determine the occupancy status. As an example, the optimal NN model may be a first NN model associated with a combination of CO2, noise, and motion sensors. However, for the predetermined time duration, sequence of data from the CO2 sensor may be missing. As a result, a second NN model associated with only the noise and motion sensors may be selected to detect the occupancy status of the room.

In some embodiments, the one or more processors 202 may be configured to process each of the sensor readings received from the active (working) sensors of the plurality of sensors within the room 120. The one or more processors 202 may be configured to receive from the active sensors, at a time instance when occupancy of the room 120 is to be detected, the sequence of measurements sensed over the predetermined time duration. The sequence of measurements includes real-time sensor readings of the corresponding occupancy parameters at the time instance and historic sensor readings of the corresponding occupancy parameters sensed over the predetermined time duration.

In some embodiments, the one or more processors 202 may be configured to preprocess the received sequence of measurements prior to providing the sequence of measurements as input to the selected NN model. In some embodiments, the preprocessing of the received sequence of measurements includes at least one of normalizing, resampling, and filtering of the sequence of measurements. In some embodiments, the one or more processors 202 may be configured to resample each of the received sequence of measurements based on a resolution parameter, i.e., based on a desired resolution, in order to generate a resampled sequence of measurements. In some embodiments, the resampled sequence of measurements may include an evenly spaced sequence of data associated with the received sequence of measurements. In some embodiments, sensor readings from the IAQ sensor and the noise sensor may be resampled based on interpolation techniques. In some embodiments, sensor readings from PIR sensor may be resampled using zero-order hold techniques. In some embodiments, the resolution parameter may be any desired resolution such as, but not limited to, 5 seconds, 30 seconds, 1 minute, and the like.

In some embodiments, the one or more processors 202 may be configured to filter the resampled sequence of measurements in order to generate a filtered sequence of measurements. The filtered sequence of measurements may correspond to the preprocessed sequence of measurements determined by the resampling and filtering of the sequence of measurements. In some embodiments, the one or more processors 202 may be configured to remove noise from the resampled sequence of measurements and/or remove outliers from the resampled sequence of measurements. In some embodiments, the one or more processors 202 may be configured to smoothen the resampled sequence of measurements based on one or more filtering techniques such as, but not limited to, Gaussian filtering, Savitzky-Golay filtering, and the like. In some embodiments, the sequence of measurements may be received at a desired resolution and resampling may not be required. In such embodiments, the one or more processors 202 may be configured to filter the sequence of measurements in order to generate the filtered sequence of measurements, which may correspond to the preprocessed sequence of measurements. In some embodiments, the one or more processors 202 may be configured to normalize each of the received sequence of measurements to generate a normalized sequence of measurements, which may correspond to the preprocessed sequence of measurements.

In some embodiments, the one or more processors 202 may be configured to pass the filtered sequence of data to the selected NN model, and the occupancy status and the confidence value is determined based on the selected NN model and the filtered sequence of measurements. The one or more processors 202 may be configured to determine, based on the selected NN model and the filtered sequence of measurements, a first classification probability value and a second classification probability value associated with the occupancy status of the room 120. In some embodiments, the one or more processors 202 may be configured to determine a sequence of characteristics of the sequence of measurements, such as, a sequence of standard deviations, derivatives, moving average, etc. The determined sequence of characteristics may be provided to the selected NN model, and the first classification probability value and the second classification probability value associated with the occupancy status of the room 120 may be determined based on the selected NN model and the determined sequence of characteristics. The one or more processors 202 may be configured to compare the first classification probability value and the second classification probability value.

Based on the comparison of the first classification probability value and the second classification probability value, the one or more processors 202 may be configured to determine the occupancy state and the confidence value of the determined occupancy state. In some embodiments, the one or more processors 202 may be configured to determine the occupancy status to be the positive status indicating occupancy of the room 120 in response to the determination that the first classification probability value is greater than the second classification probability value. In some embodiments, the first classification probability value may be the confidence value associated with the determined occupancy state (positive status). In some embodiments, the one or more processors 202 may be configured to determine the occupancy status to be the negative status indicating non-occupancy of the room 120 in response to the determination that the second classification probability value is greater than the first classification probability value. In some embodiments, the second classification probability value may be the confidence value associated with the determined occupancy status (negative status).

In some embodiments, the one or more processors 202 may be configured to store the occupancy state and the confidence value of the determined occupancy state in the memory 204, such as, in the sensor data unit 204a of the memory 204. In some embodiments, the one or more processors 202 may be configured to determine the occupancy state and the confidence value of the determined occupancy state at a predetermined frequency. The predetermined frequency may be any desired frequency, such as, but not limited to, 30 seconds, 1 minute, 2 minutes, and the like. In some embodiments, the one or more processors 202 may be configured to receive a user input indicative of a request to determine the occupancy state, and in response to receiving the user input, the one or more processors 202 may be configured to determine the occupancy state and the confidence value of the determined occupancy state. In some embodiments, the user input may be provided by a staff member via a user device in communication with the control device 130. In some embodiments, the user input may be provided via a web-based application or a mobile application on the user device.

In some embodiments, the one or more processors 202 may be configured to receive room allotment status for the room 120 from the room management unit 160 and determine the occupancy status of the room 120 based on the received room allotment status. The room allotment status may include, for instance, information regarding whether the room 120 is allotted to an occupant, whether the room 120 is available for allotment, and check-in/check-out times associated with the room 120. The one or more processors 202 may consider the room allotment status to determine the occupancy status. As an example, the one or more processors 202 may determine the occupancy status of the room 120, in conjunction with the plurality of sensors 122a-122n, only when the room allotment status indicates that the room 120 is allotted to an occupant. As another example, the one or more processors 202 may determine the occupancy status of the room 120, in conjunction with the plurality of sensors 122a-122n, only when the room allotment status indicates that an occupant may be inside the room 120 based on the check-in and check-out times associated with the room 120.

In some embodiments, the one or more processors 202 may be configured to receive sensor readings from different combination of sensors from among the plurality of sensors 122a-122n based on one or more external parameters, such as, certain time of the day. As an example, the one or more processors 202 may be configured to receive sensor readings from a first combination of sensors during morning time, and from a second combination of sensors during night time.

In some embodiments, the one or more processors 202 may be configured to train the plurality of NN models based on the type or combination of the plurality of sensors 122a-122n sending the sensor readings for the corresponding occupancy parameters. Each of the plurality of NN models may be associated with a combination of the plurality of sensors 122a-122n such that in case of a failure of one or more sensors in the room 120, a relevant NN model may be selected based on the active sensors within the room 120 to determine the occupancy status of the room 120. An optimal NN network may initially be selected from the plurality of NN models, based on the training, to detect the occupancy status of the room 120. In some scenarios, a different NN model may be selected from the plurality of NN models as the optimal NN network, such as, when there is sensor failure and/or missing information associated with one or more sensors. As an example, initially, a NN model based on a combination of noise sensor, PIR sensor, and IAQ sensor may be in use as the optimal NN model to determine the occupancy status of the room 120. In case the noise sensor fails or in case the noise sensor may provide incomplete readings, the PIR sensor and the IAQ sensor may still provide the respective sensor readings. Another NN model, trained to consider sensors readings from a combination of PIR sensor and IAQ sensor, may then be selected as the optimal NN model to determine the occupancy status. A reliable system may thus be achieved that determines the occupancy status of the room 120 despite failure of one or more sensors.

In some embodiments, the one or more processors 202 may be configured to train the plurality of NN models for corresponding sensor types and combinations. In some embodiments, the plurality of NN models may be trained based on supervised learning using historical sensor readings from a laboratory-based setup. In some embodiments, the plurality of NN models may be trained based on supervised learning using historical sensor readings and actual occupancy data associated with the room 120 and/or other rooms. Accordingly, the plurality of NN models may be trained based on at least one of sensor readings from a laboratory-based setup or sensor readings from one or more rooms. In some embodiments, the plurality of NN models may initially be trained based on sensor readings from the laboratory-based setup, and once deployed in a room (such as, room 120), may be further trained based on sensor readings from said room and/or other different rooms.

For each NN model, the one or more processors 202 may be configured to acquire historical sensor readings for the corresponding sensor types and combinations. In some embodiments, the historical sensor readings may be retrieved from the sensor data unit 204a of the memory 204. The historical sensor readings may be for a specified period of time. In some embodiments, the historical sensor readings may comprise sequence of measurements for the specified period of time.

In some embodiments, the one or more processors 202 may be configured to acquire actual occupancy data for the specified period of time, the actual occupancy data being indicative of the actual occupancy status of the room 120 at each time instance of the specified period of time. The actual occupancy data may be used to construct the training output of the NN model to be trained. In some embodiments, the NN model to be trained may have two output labels - label [1,0] indicating that the room is occupied and label [0,1] indicating that the room is unoccupied.

In some embodiments, the one or more processors 202 may be configured to provide the historical sensor readings as training input to the NN model to be trained. In some embodiments, the one or more processors 202 may be configured to resample, smoothen, and normalize the historical sensor readings prior to providing the historical sensor readings as training input to the NN model under training. In some embodiments, the one or more processors 202 may be configured to transform the historical sensor readings into a set of sequences based on windowing techniques. As an example, a window size in minutes and step size in minutes may be determined. In some embodiments, the window size may have a same value as the predetermined time duration for which the sequence of measurements is to be received when the NN model under training is deployed for real-time use. In some embodiments, a resolution of the historical sensor readings to be provided as input to the NN model under training may have a same value as the resolution parameter associated with the sequence of measurements to be received when the NN model under training is deployed for real-time use.

In some embodiments, the one or more processors 202 may be configured to train the NN model based on the training input (historical sensor readings) and the training output (actual occupancy data). Similarly, each of the plurality of NN models may be trained based on historical sensor readings from the corresponding type and combination of sensors. A fail-proof set of NN models may thus be trained and stored in the NN unit 204b of the memory 204 so that, in real-time use, readings from any combination of sensors that are active within the room 120 can be used to determine the occupancy of the room 120.

In some embodiments, based on the training, an optimal NN model may be determined by the one or more processors 202 for the room 120, and the optimal NN model may be selected by the one or more processors 202 to detect the occupancy status of the room 120. The optimal NN model may refer to the NN model which provides the most accurate detection of the occupancy status of the room 120 based on the training. In case of failure of one or more sensors from among the combination of sensors associated with the optimal NN model, another NN model may be selected by the one or more processors 202 to detect the occupancy status of the room 120. In some embodiments, the training of the plurality of NN model may include receiving feedback from one or more staff members associated with the room 120, the feedback being related to the occupancy status of the room 120. Based on the feedback, the optimal NN model may be updated from among the plurality of NN models. For instance, initially a first NN model may be selected as the optimal NN model for detecting the occupancy status, however, based on the feedback, it may be determined that a second NN model provides a better accuracy and hence the second NN model may be determined as the optimal NN model for detecting the occupancy status of the room 120.

In some embodiments, the one or more processors 202 may be configured to trigger, in response to determining the occupancy status, a control action associated with the room 120 based on the determined occupancy status. In some embodiments, the one or more processors 202 may be configured to control an operation of the HVAC system 124, the thermostat 126, and the lighting units 128 associated with the room 120 based on the determined occupancy status of the room 120. In some embodiments, upon determining that the occupancy status of the room is the negative status, i.e., the room 120 is unoccupied, the one or more processors 202 may be configured to send control signals to the thermostat 126 and/or the HVAC system 124 to adjust the temperature setpoints of the room 120, such as, to set back the temperature setpoints of the room 120. Thus, an efficient temperature setback control is achieved as the temperature may be set back for the room 120 when the room 120 is unoccupied, leading to energy savings for the room 120. In some embodiments, the one or more processors 202 may be configured to send control signals to the lighting units 128, either directly to the lighting units 128 or through a lighting control unit within the room 120, to adjust the operation of the lighting units 128. For instance, the lighting units 128 may be turned off when the room 120 is unoccupied, leading to further energy savings for the room 120.

In some embodiments, the one or more processors 202 may be configured to cause information related to the determined occupancy status and the confidence value to be displayed on a user interface of one or more user devices. In some embodiments, information related to the determined occupancy status and the confidence value may be displayed on a user interface disposed within the room 120, such as, a user interface associated with the thermostat 126. In some embodiments, information related to the determined occupancy status and the confidence value may be displayed on a user interface associated with a handheld device of a user, such as, a handheld device of one or more staff members. Accordingly, staff members may monitor the occupancy status of the room 120, thereby facilitating the staff members to plan housekeeping and maintenance tasks for the room 120.

In some embodiments, the one or more processors 202 may be configured to send information related to the determined occupancy status and the confidence value to the room management unit 160. The room management unit 160 may be configured to generate, based on the occupancy status, maintenance alerts and/or tracking alerts for the room 120. In some embodiments, the maintenance alerts may be indicative of maintenance requirement for the room 120 and the tracking alerts may be indicative of changes in the occupancy status of the room 120. In some embodiments, information related to the determined occupancy status and the confidence value may be displayed on a user interface associated with the room management unit 160. The room management unit 160 may further be configured to generate maintenance and tracking alerts for one or more staff members, allowing the staff members to capitalize on the time when the room 120 is unoccupied to carry out housekeeping and maintenance tasks.

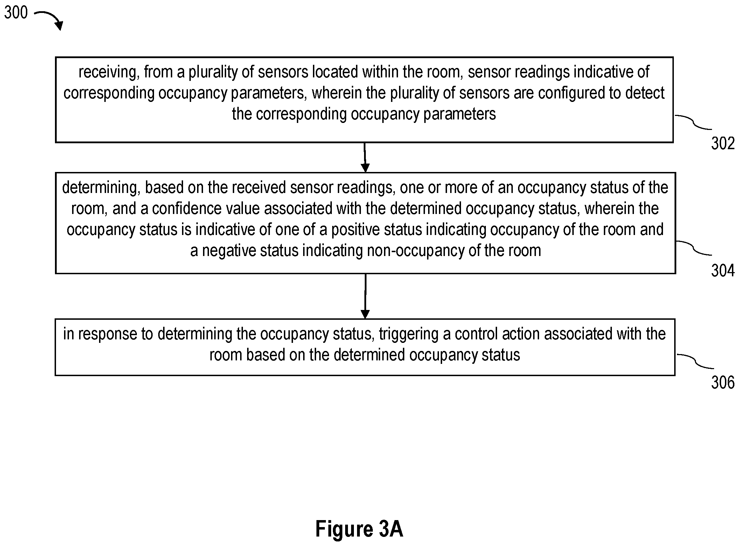

**Figure 3A** illustrates a process flow depicting a method 300 for detecting occupancy of rooms. The method 300 may be described with reference to room 120, and a skilled person will appreciate that the method may be performed for each of the plurality of rooms 120a-120n in the indoor area 110.

At step 302, the method 300 comprises receiving, from a plurality of sensors 122a-122n located within the room 120, sensor readings indicative of corresponding occupancy parameters. The plurality of sensors 122a-122n may be configured to measure the corresponding occupancy parameters. In some embodiments, the sensor readings may be received from at least two of the plurality of sensors 122a-122n. In some embodiments, the sensor readings may be received from a combination of sensors from among the plurality of sensors 122a-122n. In some embodiments, the received sensor readings comprise the sequence of measurements of the corresponding occupancy parameters sensed over a predetermined time duration.

At step 304, the method 300 comprises determining, based on the received sensor readings, one or more of the occupancy status of the room 120, and the confidence value associated with the determined occupancy status. The occupancy status may be indicative of one of a positive status indicating occupancy of the room and a negative status indicating non-occupancy of the room.

In some embodiments, the occupancy status and the confidence value may be determined based on a NN model selected from a plurality of NN models. The NN model may be selected based on the type, or combination, of the plurality of sensors 122a-122n associated with the received sensor readings. In some embodiments, the plurality of NN models may be trained based on historical sensor readings associated with the plurality of sensors 122a-122n. In some embodiments, each of the plurality of NN models may be associated with a corresponding type, or combination, of the plurality of sensors 122a-122n, and the plurality of NN models may be trained based on historical sensor readings from the corresponding type of the plurality of sensors 122a-122n.

At step 306, the method 300 comprises, in response to determining the occupancy status, triggering a control action associated with the room 120 based on the determined occupancy status. In some embodiments, triggering the control action may include controlling the operation of one or more of the thermostat 126, the HVAC system 124, and the lighting units 128 associated with the room 120. In some embodiments, triggering the control action may include causing display of information related to the occupancy status and the confidence value on a user interface disposed within the room and/or a user interface associated with a handheld device of a user. In some embodiments, triggering the control action may include sending information related to the occupancy status and the confidence value to the room management unit 160 that may generate maintenance and/or tracking alerts for the room 120.

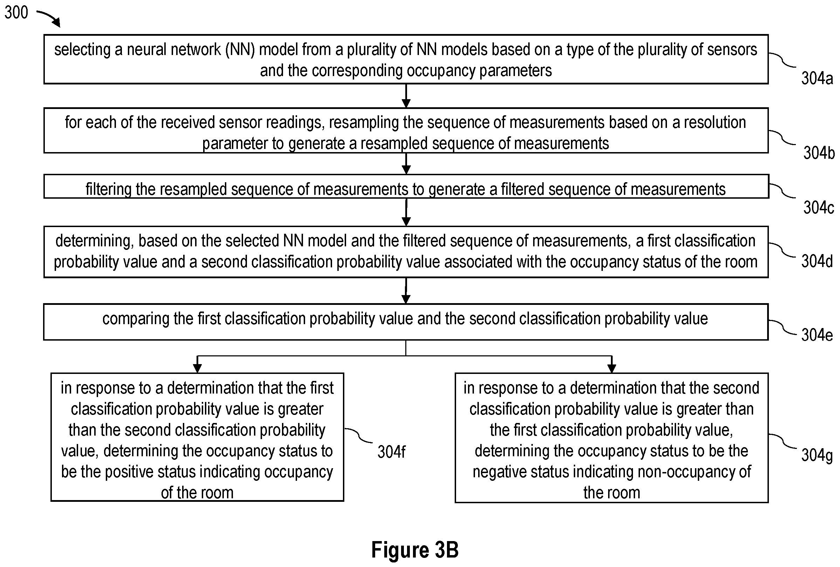

In some embodiments, to determine the occupancy status and the confidence value, the method 300 may comprise sub-steps 304a-304g for determining the occupancy status and the confidence value, as depicted in **Figure 3B****.** At step 304a, the method 300 comprises selecting a NN model from the plurality of NN models based on a type of the plurality of sensors 122a-122n and the corresponding occupancy parameters.

At step 304b, the method 300 comprises, for each received sensor readings, resampling the sequence of measurements associated with the received sensor readings based on a resolution parameter, in order to generate a resampled sequence of measurements.

At step 304c, the method 300 comprises filtering the resampled sequence of measurements to generate a filtered sequence of measurements.

At step 304d, the method 300 comprises determining, based on the selected NN model and the filtered sequence of measurements, a first classification probability value and a second classification probability value associated with the occupancy status of the room 120.

At step 304e, the method 300 comprises comparing the first classification probability value and the second classification probability value.

At step 304f, the method 300 comprises determining the occupancy status to be the positive status indicating occupancy of the room 120, in response to a determination that the first classification probability value is greater than the second classification probability value.

At step 304g, the method 300 comprises determining the occupancy status to be the negative status indicating non-occupancy of the room 120, in response to a determination that the second classification probability value is greater than the first classification probability value.

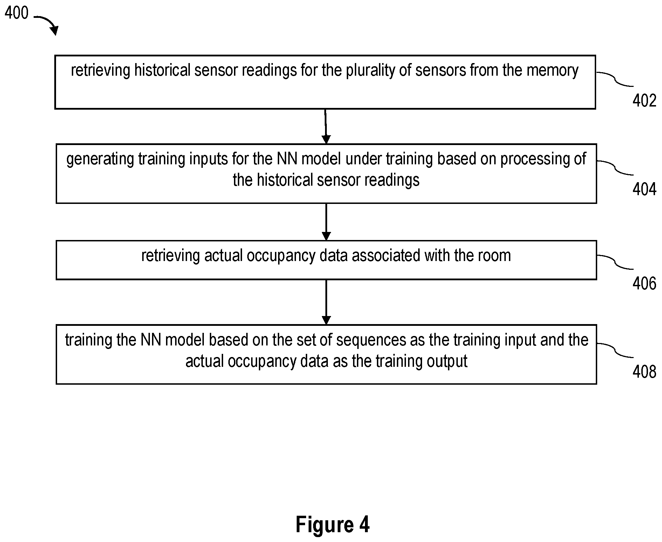

Figure 4 illustrates a process flow depicting a method 400 for training a NN model of the plurality of NN models to determine the occupancy status of the room 120 and the confidence value of the occupancy status.

At step 402, the method 400 comprises retrieving historical sensor readings for the plurality of sensors 122a-122n from the memory 204. In some embodiments, the historical sensor readings may include time series measurements of the plurality of sensors 122a-122n. In some embodiments, the historical sensor readings may be with respect to a particular period of time. In some embodiments, the NN model may be related to a type, or combination, of the plurality of sensors 122a-122n, and the NN model may be trained on the basis of the historical sensor readings of the related type of the plurality of sensors 122a-122n.

At step 404, the method 400 comprises generating training inputs for the NN model under training based on processing of the historical sensor readings. In some embodiments, the historical sensor readings may comprise time series measurements, or sequence of measurements, and the time series measurements may be resampled, smoothened, and normalized. In some embodiments, the time series measurements may be transformed using windowing techniques into a set of sequences that form the training inputs for the NN model under training.

At step 406, the method 400 comprises retrieving actual occupancy data associated with the room 120. In some embodiments, the actual occupancy data may be stored in the memory 204. In some embodiments, the actual occupancy data may be with respect to the particular period of time for which the historical sensor readings of the plurality of sensors 122a-122n are retrieved.

At step 408, the method 400 comprises training the NN model based on the set of sequences as the training input and the actual occupancy data as the training output.

In some embodiments, the method 400 may be performed for each of the plurality of NN models to train the plurality of NN models on the basis of the historical sensor readings of the related types and combinations of the plurality of sensors 122a-122n.

While the above steps of Figures 3A, 3B, and 4 are shown and described in a particular sequence, the steps may occur in variations to the sequence in accordance with various embodiments of the invention. Further, a detailed description related to the various steps of Figures 3A, 3B, and 4 is already covered in the description related to Figures 1-2 and is om itted herein for the sake of brevity.

In some embodiments, the one or more processors 202 may be configured to execute instructions included in a computer program product. The computer program product may be embodied on a non-transitory computer readable medium. The computer program product may comprise instructions that, when executed by the one or more processors 202, cause the one or more processors 202 to perform the method steps are detailed with reference to Figures 3A, 3B, and 4.

The embodiments of the invention provide methods and systems for accurate and high-confidence occupancy detection in rooms. Accurate occupancy detection allows for automatic control of appliances within the rooms, leading to energy and cost savings. For instance, temperature can be controlled efficiently within the room during unoccupied hours, resulting in energy savings. Accurate occupancy detection is essential for efficient temperature control.

Further, occupancy detection with high confidence allows for improved staff efficiency as well as allows insights into room occupancy trends. For instance, staff members may rely on accurate occupancy status of rooms to efficiently plan housekeeping tasks. Further, staff members need not manually check whether rooms are occupied or not and can capitalize on the time when the rooms are unoccupied for maintenance and housekeeping.

Accordingly, a high confidence occupancy detection system is provided at a low cost. The detection system does not affect guest privacy. Moreover, the detection system can be easily installed and does not require regular maintenance.

As would be apparent to a person in the art, various working modifications may be made to the methods disclosed herein in order to implement the inventive concept as taught herein.

Moreover, the actions of any flow diagram need not be implemented in the order shown; nor do all of the acts necessarily need to be performed. Also, those acts that are not dependent on other acts may be performed in parallel with the other acts.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A system (150) for detecting an occupancy of a room (120,120a,120b,120n), the system comprising:
a plurality of sensors (122a,122b,122n) located within the room, the plurality of sensors being configured to measure corresponding occupancy parameters; and
a control unit (130) communicatively connected with the plurality of sensors, the control unit comprising one or more processors (202) configured to:
receive, from the plurality of sensors, sensor readings indicative of the corresponding occupancy parameters, wherein each of the received sensor readings includes a sequence of measurements, over a predetermined time duration, of the corresponding occupancy parameters;
determine, based on the received sensor readings, one or more of an occupancy status of the room, and a confidence value associated with the determined occupancy status, wherein the occupancy status is indicative of one of a positive status indicating occupancy of the room and a negative status indicating non-occupancy of the room; and
in response to determining the occupancy status, trigger a control action associated with the room based on the determined occupancy status.

2. The system (150) of claim 1, wherein to determine one or more of the occupancy status and the confidence value, the one or more processors (202) are configured to:
select a neural network, NN, model from a plurality of NN models based on a type of the plurality of sensors (122a,122b,122n) and the corresponding occupancy parameters; and
determine the one or more of the occupancy status and the confidence value based on the selected NN model.

3. The system (150) of claim 2, wherein to determine one or more of the occupancy status and the confidence value, the one or more processors (202) are further configured to:
for each of the received sensor readings:
preprocess the sequence of measurements to generate a preprocessed sequence of measurements, wherein to preprocess the sequence of measurements, the one or more processors are configured to, at least one of, resample, filter, and normalize the sequence of measurements; and
determine, based on the selected NN model and the preprocessed sequence of measurements, the occupancy status, and the confidence value.

4. The system of claim 3, wherein the one or more processors (202) are further configured to:
determine, based on the selected NN model and the preprocessed sequence of measurements, a first classification probability value and a second classification probability value associated with the occupancy status of the room (120, 120a, 120b, 120n);
compare the first classification probability value and the second classification probability value;
in response to a determination that the first classification probability value is greater than the second classification probability value, determine the occupancy status to be the positive status indicating occupancy of the room (120, 120a, 120b, 120n); and
in response to a determination that the second classification probability value is greater than the first classification probability value, determine the occupancy status to be the negative status indicating non-occupancy of the room (120, 120a, 120b, 120n).

5. The system (150) of any preceding claim, wherein to trigger the control action associated with the room (120,120a,120b,120n), the one or more processors (202) are configured to control an operation of one or more devices associated with the room, wherein the one or more devices comprises a heating, ventilation, and air-conditioning, HVAC, system (124), a thermostat (126), and lighting units (128).

6. The system (150) of any preceding claim, wherein to trigger the control action associated with the room (120,120a,120b,120n), the one or more processors (202) are configured to:
cause information related to the occupancy status and the confidence value to be displayed on one or more of a user interface disposed within the room and a user interface associated with a handheld device of a user,
and/or send information related to the occupancy status and the confidence value to a room management unit (160) configured for generating, based on the determined occupancy status, one or more of maintenance alerts for the room and tracking alerts for the room.

7. The system (150) of any preceding claim, wherein the occupancy parameters comprise one or more of motion, occupant heart-beat readings, temperature, humidity, pressure, proximity, noise, particulate matter, PM, volatile organic compounds, VOCs, carbon dioxide, CO2, light intensity, lock operation, and plug power consumption.

8. The system (150) of any preceding claim, wherein the one or more processors (202) are configured to:
receive, from a user, a user input indicative of a request to determine the occupancy status of the room (120,120a,120b,120n); and
in response to receiving the user input, determine one or more of the occupancy status and the confidence value.

9. A method (300) for detecting an occupancy of a room (120,120a,120b,120n), the method comprising:
receiving (302), from a plurality of sensors (122a,122b,122n) located within the room, sensor readings indicative of corresponding occupancy parameters, wherein the plurality of sensors are configured to measure the corresponding occupancy parameters, and wherein each of the received sensor readings includes a sequence of measurements, over a predetermined time duration, of the corresponding occupancy parameters; and
determining (304), based on the received sensor readings, one or more of an occupancy status of the room, and a confidence value associated with the determined occupancy status, wherein the occupancy status is indicative of one of a positive status indicating occupancy of the room and a negative status indicating non-occupancy of the room; and
in response to determining the occupancy status, triggering (306) a control action associated with the room based on the determined occupancy status.

10. The method (300) of claim 9, wherein determining (304) one or more of the occupancy status and the confidence value comprises:
selecting (304a) a neural network, NN, model from a plurality of NN models based on a type of the plurality of sensors and the corresponding occupancy parameters; and
determining the one or more of the occupancy status and the confidence value based on the selected NN model.

11. The method (300) of claim 10, wherein determining (304) one or more of the occupancy status and the confidence value further comprises:
for each of the received sensor readings:
preprocessing the sequence of measurements to generate a preprocessed sequence of measurements, wherein preprocessing the sequence of measurements comprises at least one of resampling (304b), filtering (304c), and normalizing the sequence of measurements; and
determining, based on the selected NN model and the preprocessed sequence of measurements, the occupancy status and the confidence value.

12. The method of claim 11, further comprising:
determining (304d), based on the selected NN model and the preprocessed sequence of measurements, a first classification probability value and a second classification probability value associated with the occupancy status of the room;
comparing (304e) the first classification probability value and the second classification probability value;
in response to a determination that the first classification probability value is greater than the second classification probability value, determining (304f) the occupancy status to be the positive status indicating occupancy of the room; and
in response to a determination that the second classification probability value is greater than the first classification probability value, determining (304g) the occupancy status to be the negative status indicating non-occupancy of the room.

13. The method (300) of any of claims 9 to 12, wherein triggering the control action associated with the room comprises:
controlling an operation of one or more devices associated with the room, wherein the one or more devices comprises a heating, ventilation, and air-conditioning, HVAC, system, a thermostat, and lighting units,
and/or causing information related to the occupancy status and the confidence value to be displayed on one or more of a user interface disposed within the room and a user interface associated with a handheld device of a user,
and/or sending information related to the occupancy status and the confidence value to a room management unit configured for generating, based on the determined occupancy status, one or more of maintenance alerts for the room and tracking alerts for the room.

14. The method (300) of any of claims 9 to 13, wherein the occupancy parameters comprise one or more of motion, temperature, humidity, pressure, occupant heart-beat readings, proximity, noise, particulate matter, PM, volatile organic compounds, VOCs, carbon dioxide, CO2, light intensity, lock operation, and plug power consumption.

15. The method (300) of any of claims 9 to 14, further comprising:
receiving, from a user, a user input indicative of a request to determine the occupancy status of the room; and
in response to receiving the user input, determining one or more of the occupancy status and the confidence value.
